# EUROPÄISCHE PATENTSCHRIFT

(11) **EP 1 656 052 B1**
(45) Veröffentlichungstag und Bekanntmachung des Hinweises auf die Patenterteilung: **29.11.2006**
(21) Anmeldenummer: 04764176.6
(22) Anmeldetag: 16.08.2004
(51) Int. Cl.: A47C 7/46

(54) **LORDOSENSTÜTZKORB**
LORDOTIC SUPPORT
ARMATURE DE SOUTIEN POUR LORDOSE

(30) Priorität: 18.08.2003 DE 10337881
(43) Veröffentlichungstag der Anmeldung: 17.05.2006
(73) Patentinhaber: Schukra Gerätebau AG, 2560 Berndorf (AT)
(72) Erfinder: STÖSSEL, Veit, 90409 Nürnberg (DE)
(74) Vertreter: Banzer, Hans-Jörg
(86) Internationale Anmeldenummer: PCT/EP2004/009184
(87) Internationale Veröffentlichungsnummer: WO 2005/018984

(56) Entgegenhaltungen:
- EP-A- 0 754 591
- DE-U- 29 917 853
- US-A- 5 934 752
- US-A- 6 139 102
- US-A1- 2002 043 842
- US-A1- 2002 060 492
- US-B1- 6 257 665

## Beschreibung

Die vorliegende Erfindung betrifft einen Lordosenstützkorb, wie er in Rückenlehnen von Sitzen, beispielsweise Kraftfahrzeugsitzen, zur Stützung des Lendenwirbelbereichs (Lordosenbereichs) einer auf dem jeweiligen Sitz sitzenden Person eingesetzt werden kann.

Aus dem Stand der Technik sind Lordosenstützen bekannt, welche eine Vielzahl von unterschiedlichen Komponenten aufweisen. Ein Beispiel hierfür ist die in der EP 0 485 483 B1 der Anmelderin offenbarte Lordosenstütze. Aufgrund der Verwendung einer Vielzahl von unterschiedlichen Komponenten ist die Herstellung der Lordosenstütze relativ aufwändig und kostspielig. Darüber hinaus weisen derartige Lordosenstützen ein relativ hohes Gewicht auf.

Zur Vermeidung dieses Problems wurden zwar bereits Lordosenstützen bzw. Lordosenstützkörbe oder Lordosenschilde für Lordosenstützen vorgeschlagen, welche im Wesentlichen einteilig ausgestaltet und beispielsweise aus Kunststoff gefertigt sind. Derartige Lordosenstützkörbe benötigen jedoch im Verhältnis zu ihrer Funktions- bzw. Leistungsfähigkeit relativ viel Material, so dass das Gewicht und die Herstellungskosten weiterhin vergleichsweise hoch sind.

Der vorliegenden Erfindung liegt daher die Aufgabe zugrunde, einen Lordosenstützkorb bereitzustellen, welcher einerseits mit geringem Aufwand, geringem Materialbedarf und demzufolge geringen Kosten hergestellt werden kann und andererseits eine weiterhin ausreichende Stützfunktionalität gewährleistet.

Diese Aufgabe wird erfindungsgemäß durch einen Lordosenstützkorb mit den Merkmalen des Anspruches 1 gelöst. Die Unteransprüche definieren jeweils bevorzugte und vorteilhafte Ausführungsformen der vorliegenden Erfindung.

Der erfindungsgemäße Lordosenstützkorb weist mindestens ein Stützelement mit mindestens einer Stützfläche zur Ausübung einer Lordosenstützfunktion nach Einbau in einen Sitz beliebiger Art, beispielsweise einen Kraftfahrzeugsitz, auf. Die mindestens eine Stützfläche ist durch eine Fläche mit einer Vielzahl von gleichmäßig angeordneten Löchern gebildet, welche insbesondere durch die Stützfläche bzw. das Stützelement hindurch verlaufen. Durch das Ausbilden der Vielzahl von Löchern in der Vorderseite des mindestens einen Stützelements kann das Gewicht und der Materialbedarf des gesamten Lordosenstützkorbs deutlich reduziert werden.

Um dennoch eine ausreichende Funktionsfähigkeit bzw. Stützfunktion zu gewährleisten und die diesbezüglich vorgesehenen Normen, beispielsweise das sog. EN-Erfordernis (ECE-R17), zu erfüllen, ist auf der Rückseite des mindestens einen Stützelements eine gleichmäßig angeordnete Rippenstruktur ausgebildet, die somit dem entsprechenden Stützelement eine definierte Steifigkeit verleiht.

Die in der Vorderseite des mindestens einen Stützelements ausgebildeten Löcher können netzartig gleichmäßig über im Wesentlichen die gesamte Stützfläche des entsprechenden Stützelements angeordnet sein. Die auf der Rückseite des mindestens einen Stützelements ausgebildete Rippenstruktur ist derart, dass durch die Rippen eine Vielzahl von gleichmäßig angeordneten Öffnungen definiert wird, wobei die Abmessungen dieser Öffnungen vorzugsweise größer als die Abmessungen der Löcher sind und insbesondere einem Vielfachen der Abmessungen der Löcher entsprechen.

Die auf der Rückseite des mindestens einen Stützelements vorgesehene Rippenstruktur kann derart ausgestaltet sein, dass hierdurch miteinander verbundene und im Wesentlichen gleichmäßig angeordnete Mehrecke, beispielsweise Rauten oder Vierecke, Sechsecke, Achtecke etc., definiert werden. Besonders vorteilhaft ist es, wenn die Rippenstruktur in Form von einer Wabenstruktur auf der Rückseite des mindestens einen Stützelements ausgebildet ist.

Die auf der Rückseite des mindestens einen Stützelements ausgebildete Rippenstruktur umfasst vorzugsweise eine Vielzahl von miteinander verbundene Rippen, welche von der Rückseite des entsprechenden Stützelements im Wesentlichen senkrecht hervorstehen, wobei die Höhe, mit welcher die Rippen von der Rückseite des mindestens einen Stützelements hervorstehen, die Dicke bzw. Tiefe des entsprechenden Stützelements und damit auch die Dicke bzw. Tiefe des Lordosenstützkorbs definiert.

Die Rippen der Rippenstruktur können derart ausgestaltet und angeordnet sein, dass sie über einige der in der Vorderseite des entsprechenden Stützelements ausgebildeten Löcher verlaufen und diese teilweise oder vollständig abdecken. Ebenso ist es jedoch auch möglich, dass an denjenigen Stellen der Vorderseite des entsprechenden Stützelements, an denen an der Rückseite die Rippen verlaufen, keine Löcher in dem Stützelement vorgesehen sind. So können beispielsweise die Rippen entlang der Rückseite von Stegen verlaufen, welche zueinander benachbart angeordnete Löcher voneinander trennen, d. h. in diesem Fall ist die Breite der Rippen derart gewählt, dass sie maximal der Breite derartiger Stege, welche zueinander benachbarte Löcher trennen, entspricht.

Der gesamte Lordosenstützkorb ist vorzugsweise einteilig ausgebildet.

Gemäß einem bevorzugten Ausführungsbeispiel kann der Lordosenstützkorb mehrere, insbesondere zwei, Stützelemente der zuvor beschriebenen Art aufweisen, welche durch mindestens einen flexiblen Abschnitt miteinander verbunden sind. Dieser mindestens eine flexible Abschnitt weist ein ausreichendes Maß an Längsflexibilität auf, so dass einerseits eine ausreichende Steifigkeit bei Einstellung der Wölbung bzw. Krümmung des Lordosenstützkorbs gewährleistet ist und andererseits bei einem Missbrauch des Lordosenstützkorbs, d. h. bei Belastung des Lordosenstützkorbs mit einer übermäßigen Last, ein Brechen des Lordosenstützkorbs, welcher vorzugsweise aus Kunststoff gefertigt ist, vermieden werden kann, da durch entsprechende Deformation des mindestens einen flexiblen Abschnitts die entsprechende Missbrauchlast aufgenommen bzw. abgefedert werden kann.

Der erfindungsgemäße Lordosenstützkorb ist bezüglich Funktionalität einerseits und Gewicht und demzufolge Kosten andererseits optimiert, wobei dies auch auf andere Aspekte der Funktionalität, beispielsweise reduzierte Reibung, Vermeidung von scharfen Kanten etc., zutrifft. Der erfindungsgemäße Lordosenstützkorb eignet sich allgemein zum Einsatz in Lordosenstützen für beliebige Anwendungen, ohne auf den bevorzugten Anwendungsbereich in Rückenlehnen von Kraftfahrzeugsitzen beschränkt zu sein.

Die Erfindung wird nachfolgend näher unter Bezugnahme auf die Zeichnung anhand bevorzugter Ausführungsbeispiele erläutert.
Figur 1 zeigt eine Draufsicht auf eine Vorderseite eines Lordosenstützkorbs gemäß einem ersten Ausführungsbeispiel der vorliegenden Erfindung,
Figur 2 zeigt eine Draufsicht auf eine Rückseite des in Figur 1 gezeigten Lordosenstützkorbs,
Figur 3 zeigt eine Seitenansicht des in Figur 1 und Figur 2 gezeigten Lordosenstützkorbs,
Figur 4 zeigt eine vergrößerte Ansicht der Rückseite eines Stützelements des in Figur 1 - Figur 3 gezeigten Lordosenstützkorbs,
Figur 5 zeigt eine Draufsicht auf eine Vorderseite einer Stützfläche eines Lordosenstützkorbs gemäß einem weiteren Ausführungsbeispiel der Erfindung, und
Figur 6 zeigt eine Draufsicht auf eine Rückseite der Stützfläche von Figur 5.

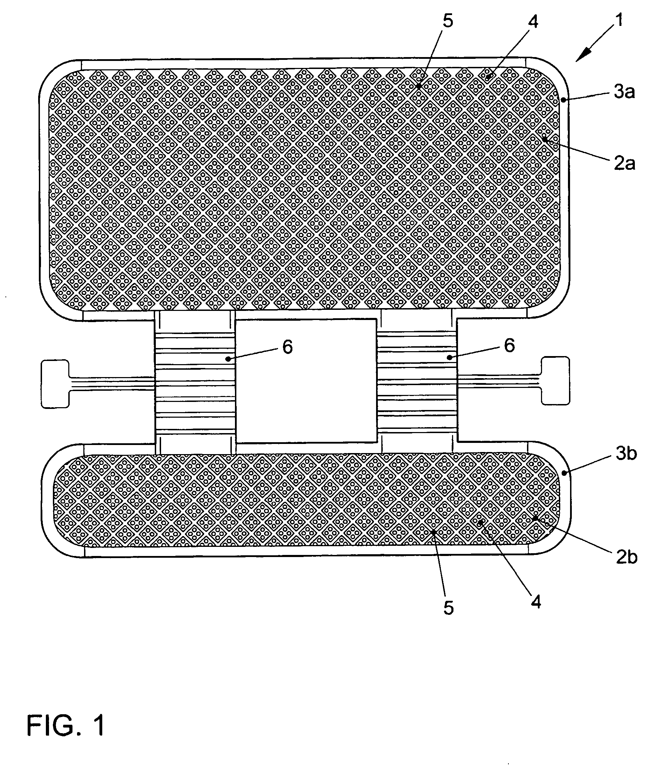

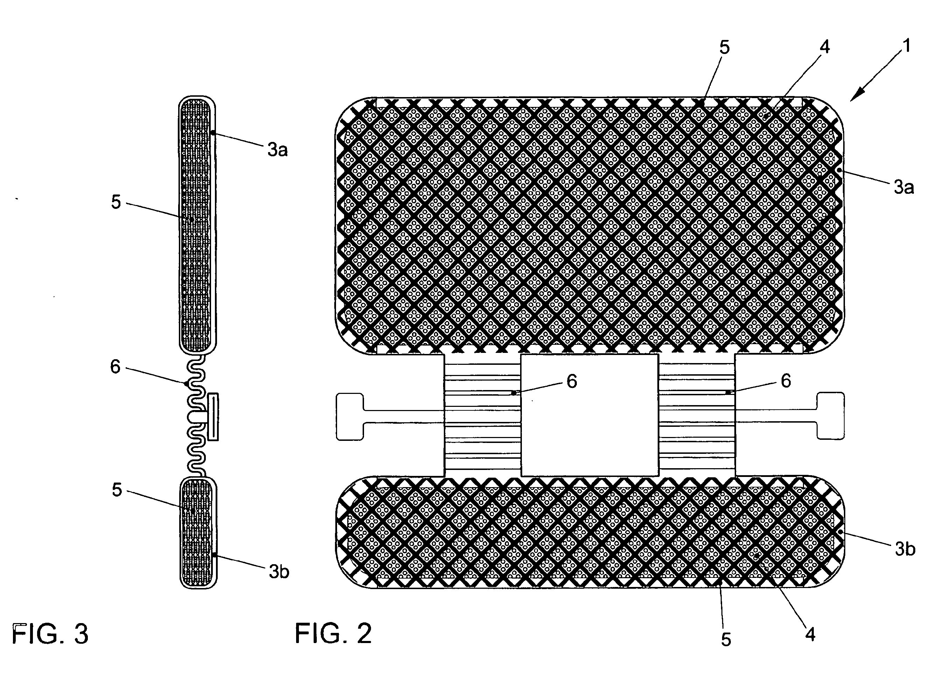

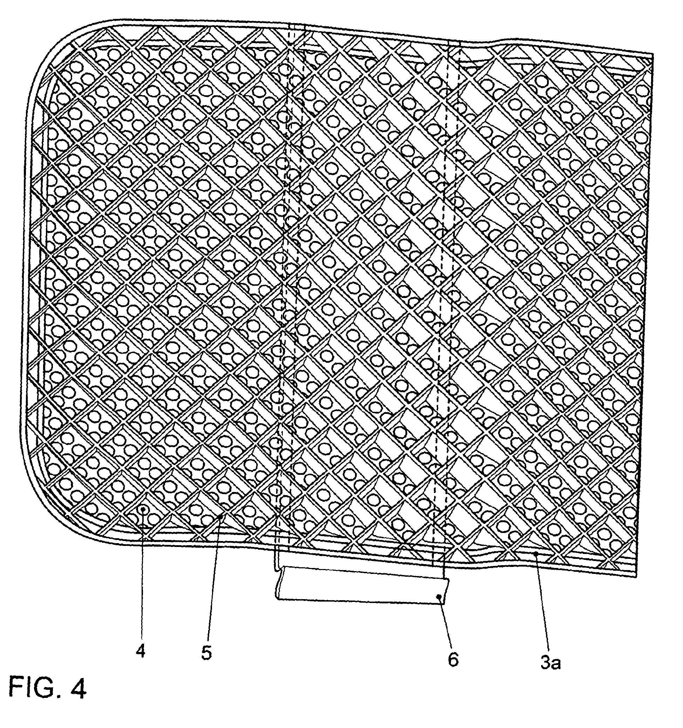

In Figur 1 - Figur 4 ist ein Lordosenstützkorb bzw. Lordosenschild 1 dargestellt, welcher einteilig aus Kunststoff gefertigt ist. Dabei ist in Figur 1 eine Draufsicht auf die Vorderseite des Lordosenstützkorbs 1, in Figur 2 eine Draufsicht auf die Rückseite des Lordosenstützkorbs 1 und in Figur 3 eine Seitenansicht des Lordosenstützkorbs 1 dargestellt. Wie nachfolgend näher erläutert wird, zeigt Figur 4 eine vergrößerte Darstellung der Rückseite eines in Figur 1 - Figur 3 dargestellten Stützelements 3a.

Der Lordosenstützkorb 1 umfasst das bereits erwähnte erste Stützelement 3a, welches wie aus Figur 1 und Figur 2 ersichtlich durch einen im Wesentlichen rechteckförmigen umlaufenden Rand mit abgerundeten Kanten und Ecken definiert ist, sowie ein zweites Stützelement 3b, welches auf analoge Art und Weise durch einen im Wesentlichen rechteckförmigen umlaufenden Rand mit abgerundeten Kanten und Ecken definiert ist. Das erste Stützelement 3a definiert eine erste Stützfläche 2a, welche bei Installation in einen Sitz, insbesondere in eine Rückenlehne des Sitzes, eine entsprechende Stützfunktion für den Lordosenbereich einer auf dem Sitz sitzenden Person ausüben kann. Das zweite Stützelement 3b definiert eine zweite Stützfläche 2b, welches auf analoge Art und Weise eine Stützfunktion für den Lordosenbereich ausüben kann, wobei bei Installation in einem Sitz das zweite Stützelement 3b insbesondere im Beckenbereich der Person angeordnet sein kann, um auch in diesem Bereich eine ausreichende Stützfunktion zu gewährleisten.

Bei dem dargestellten Ausführungsbeispiel sind die beiden Stützelemente 3a, 3b durch zwei voneinander in Breitenrichtung beabstandete flexible Abschnitte 6 verbunden, wobei die beiden flexiblen Abschnitte 6 jeweils streifenförmig ausgestaltet sind und im Wesentlichen symmetrisch und parallel zur Mittelachse des Lordosenstützkorbs 1 angeordnet sind. Wie aus Figur 3 ersichtlich ist, weist jeder flexible Abschnitt 6 ein gewisses Maß an Längsflexibilität dadurch auf, dass er abwechselnd angeordnete Vertiefungen und Erhebungen aufweist. Auf diese Weise wird eine Ziehharmonika-ähnliche Struktur mit einem wellenförmigen, insbesondere einem Sinuswellenförmigen, Verlauf erzielt, so dass die beiden Stützelemente 3a, 3b zueinander derart verstellt werden können, dass eine insgesamt gekrümmte Form des gesamten Lordosenstützkorbs erzielt werden kann. Die Längsflexibilität der flexiblen Abschnitte 6 ist insbesondere derart gestaltet, dass bei Beaufschlagung der Stützelemente 3a, 3b bzw. des gesamten Lordosenstützkorbs 1 mit einer zu großen Last (bei einem sog. Missbrauch) durch Deformation der flexiblen Abschnitte 6 diese Last aufgrund der vorhandenen Längsflexibilität abgefangen werden kann, ohne zu einem Bruch des Lordosenstützkorbs 1 bzw. einer Beschädigung der Stützelemente 3a, 3b zu führen.

Zur Verstellung der beiden Stützelemente 3a, 3b zueinander bzw. zur Einstellung der Krümmung des Lordosenstützkorbs 1 kann jeder geeignete Verstellmechanismus eingesetzt werden, ohne dass an dieser Stelle näher daraufeingegangen wird. Insbesondere ist beispielsweise eine Bowdenzuganordnung, wie sie aus dem Stand der Technik bereits bekannt ist, geeignet, wobei der Draht der Bowdenzuganordnung an einem der beiden Stützelemente 3a, 3b angreifen kann, während die Hülle des Bowdenzugkabels der Bowdenzuganordnung an dem jeweils anderen Stützelement abgestützt ist bzw. sich damit in Eingriff befindet. Durch Verstellen des Drahts innerhalb der Hülle des Bowdenzugkabels können die beiden Stützelemente 3a, 3b mehr oder weniger weit zueinander hinbewegt oder voneinander wegbewegt werden, um auf diese Weise die Wölbung des gesamten Lordosenstützkorbs 1 an die Bedürfnisse der jeweiligen Person anpassen zu können. Die (in den Figuren nicht gezeigte) Bowdenzuganordnung ist dabei insbesondere entlang der Rückseite der Stützelemente 3a, 3b angeordnet.

Aus Figur 1 ist ersichtlich, dass die Stützflächen 2a, 2b der beiden Stützelemente 3a, 3b jeweils durch eine netzartige Struktur mit einer Vielzahl von kleinen, im Wesentlichen gleichmäßig angeordneten Löchern 4 gebildet sind. Die Stützflächen 2a, 2b können somit beispielsweise durch relativ dünne Kunststoffschichten realisiert sein, in welche das gleichmäßige Muster mit den Löchern 4 eingestanzt oder auf sonstige Art und Weise ausgebildet worden ist.

Wie aus der Darstellung der Rückseite des Lordosenstützkorbs 1 von Figur 2 ersichtlich ist, erstreckt sich über die Rückseite der beiden Stützelemente 3a, 3b eine Rippenstruktur 5, welche bei dem dargestellten Ausführungsbeispiel ebenfalls netzförmig ist. Durch die Rippenstruktur 5 ist eine Vielzahl von Öffnungen definiert, wobei bei dem dargestellten Ausführungsbeispiel diese gleichmäßig angeordneten Öffnungen jeweils eine Viereck- oder Rautenform aufweisen. Die Abmessungen dieser auf der Rückseite der Stützelemente 3a, 3b ausgebildeten Öffnungen sind deutlich größer als die Abmessungen der in der Vorderseite der Stützelemente 3a, 3b ausgebildeten Löcher, wobei die Abmessungen insbesondere derart gewählt sind, dass innerhalb einer Öffnung der Rippenstruktur 5 eine Vielzahl von Löchern 4 angeordnet sind, d. h. die Abmessungen jeder durch die Rippenstruktur 5 definierten Öffnung entsprechen einem Vielfachen der Abmessungen jedes Lochs 4.

Durch die Ausbildung der Löcher 4 in der Vorderseite der beiden Stützelemente 3a, 3b kann erheblich der Materialbedarf und demzufolge die Herstellungskosten und das Gewicht des Lordosenstützkorbs 1 reduziert werden. Durch die an der Rückseite der Stützelemente 3a, 3b ausgebildeten Rippenstrukturen 5 wird hingegen eine ausreichende Steifigkeit, Robustheit und Stabilität der beiden Stützelemente 3a, 3b gewährleistet, so dass der gesamte Lordosenstützkorb 1 eine ausreichende und zufrieden stellende Stützfunktion auch bei relativ großen auf die beiden Stützelemente 3a, 3b wirkende Lasten gewährleisten kann.

In Figur 4 ist eine vergrößerte Teilansicht der Rückseite des in Figur 1 und Figur 2 gezeigten Stützelements 3a dargestellt. Aus Figur 4 ist insbesondere ersichtlich, dass die Löcher 4 als Durchgangslöcher in dem Stützelement 3a ausgebildet sind, so dass sie vollständig durch das Stützelement 3a verlaufen. Durch die Löcher 4 wird auf diese Weise auch ein Luftdurchtritt durch das Stützelement 3a gewährleistet, was bei einem Einbau des Lordosenstützkorbs 1 in einen Sitz mit Polsterung zu einer verbesserten Durchlüftung der Polsterung im Bereich des Lordosenstützkorbs 1 führt.

Ebenso ist aus Figur 4 ersichtlich, dass die Höhe der von der Rückseite des Stützelements 3a hervorstehenden Rippen 5 die Dicke bzw. Tiefe des Stützelements 3a definiert (vgl. auch Figur 3).

Schließlich ist aus Figur 4 auch ersichtlich, dass die Rippen 5 jeweils über Stege der Vorderseite des Stützelements 3a verlaufen, welche benachbarte Löcher 4 voneinander trennen, so dass bei dem dargestellten Ausführungsbeispiel die Löcher 4 durch die Rippen 5 nicht bedeckt werden.

Bei dem in den Figuren 1-4 dargestellten Ausführungsbeispiel sind die Löcher 4 sowie die Rippen 5 über die gesamte Stützfläche 2a bzw. 2b der Stützelemente 3a, 3b verteilt. Selbstverständlich ist jedoch auch möglich, die zuvor beschriebene und in Figur 1-4 dargestellte Struktur einer Kombination von den in der Vorderseite des jeweiligen Stützelements 3a, 3b ausgebildeten Löchern 4 mit den auf der Rückseite des jeweiligen Stützelements 3a, 3b ausgebildeten Rippen 5 lediglich abschnittsweise in den Stützelementen 3a, 3b vorzusehen.

Wie zuvor erwähnt worden ist, weisen die Stützelemente 3a, 3b des in Figur 1 - Figur 4 dargestellten Lordosenstützkorbs 1 die insbesondere rautenförmig verlaufende Rippenstruktur 5 an ihren Rückseiten auf. Die Rippenstruktur 5 ist jedoch nicht auf diese Form beschränkt, sondern kann im Prinzip allgemein derart ausgestaltet sein, dass durch die entsprechenden Rippen eine Vielzahl von gleichmäßig angeordneten Öffnungen, welche insbesondere durch die entsprechenden Rippen voneinander beabstandet sind, gebildet werden.

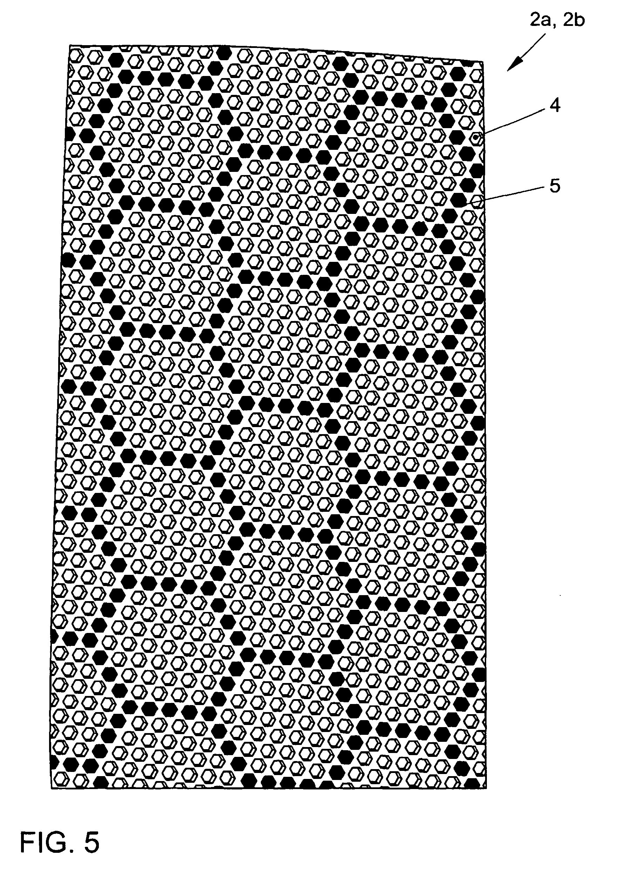

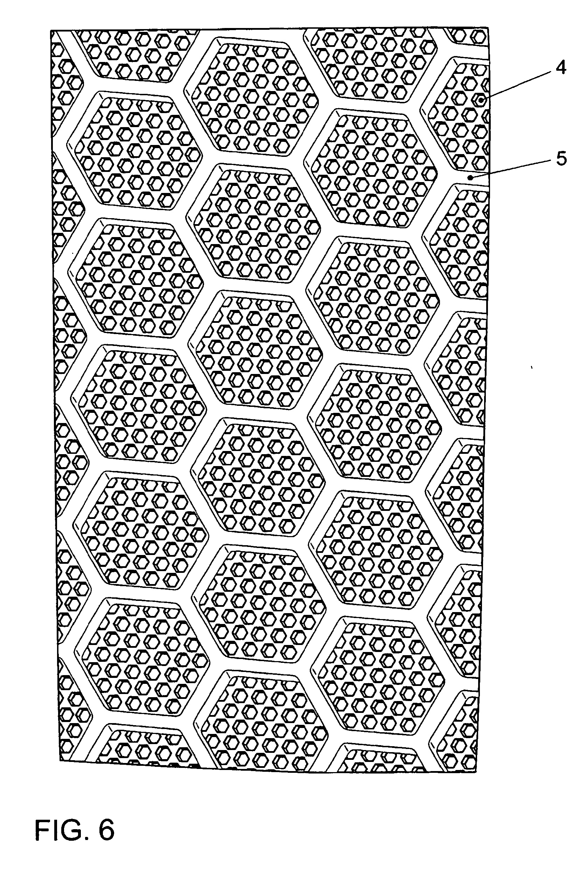

In Figur 5 und Figur 6 ist diesbezüglich ein weiteres Ausführungsbeispiel für eine Stützfläche eines Lordosenstützkorbs, beispielsweise für die Stützfläche 2a oder 2b des in Figur 1 - Figur 4 dargestellten Lordosenstützkorbs 1, gezeigt.

Dabei zeigt Figur 5 eine Draufsicht auf die Vorderseite der Stützfläche 2a bzw. 2b, während in Figur 6 eine Draufsicht auf die Rückseite dargestellt ist. Aus Figur 5 und Figur 6 ist ersichtlich, dass wiederum die jeweilige Stützfläche 2a bzw. 2b durch eine netzartige Struktur einer Vielzahl von gleichmäßig angeordneten, relativ kleinen Löchern 4 gebildet ist. Diese netzartige Struktur der Löcher 4 bzw. die dazwischen angeordneten Stege, welche jeweils benachbarte Löcher voneinander trennen, übernimmt die eigentliche Stützfunktion des jeweiligen Stützelements. Auf der Rückseite des Stützelements bzw. der Stützfläche ist wiederum eine gleichmäßige Rippenstruktur 5 ausgebildet, wobei bei dem dargestellten Ausführungsbeispiel die Rippenstruktur 5 eine Vielzahl von gleichmäßig angeordneten und durch jeweilige Rippen voneinander beabstandeten Sechsecken definiert, so dass insgesamt die Rippenstruktur 5 die Form einer Wabenstruktur annimmt. Die Rippen der Rippenstruktur 5 verlaufen dabei, wie Figur 5 und Figur 6 entnommen werden kann, derart über die Löcher 4, dass durch einzelne Rippen entsprechende Löcher 4 vollständig abgedeckt werden. Demzufolge ist in Figur 5 die wabenförmige Rippenstruktur 5 auch gut von der Vorderseite des entsprechenden Stützelements bzw. der entsprechenden Stützfläche sichtbar.

Durch die in Figur 5 und Figur 6 gezeigte wabenförmige Rippenstruktur 5 an der Rückseite des jeweiligen Stützelements kann eine besonders vorteilhafte Stabilität und Steifigkeit des Stützelements erzielt werden, wobei gleichzeitig durch die Vielzahl von in dem Stützelement ausgebildeten Löchern der Materialverbrauch, das Gewicht und die Herstellungskosten deutlich reduziert werden können.

Selbstverständlich ist die vorliegende Erfindung nicht auf die zuvor beschriebene bevorzugte Ausführungsform eines Lordosenstützkorbs mit zwei Stützelementen beschränkt, sondern kann im Prinzip auch lediglich in einem Stützelement eines Lordosenstützkorbs vorgesehen sein. Ebenso können selbstverständlich alle Merkmale des anhand von Figur 1 - Figur 4 erläuterten Ausführungsbeispiels auch auf die in Figur 5 und Figur 6 gezeigten wabenartige Rippenstruktur übertragen werden.

## Patentansprüche

1. Lordosenstützkorb,
mit mindestens einem Stützelement (3a, 3b) mit mindestens einer Stützfläche (2a, 2b),
wobei in einer Vorderseite des Stützelements (3a, 3b) eine Vielzahl von im Wesentlichen gleichmäßig angeordneten Löchern (4) ausgebildet ist, und wobei auf einer Rückseite des Stützelements (3a, 3b) mit den im Wesentlichen gleichmäßig angeordneten Löchern (4) eine Rippenstruktur (5) ausgebildet ist,
**dadurch gekennzeichnet,**
**dass** die auf der Rückseite des Stützelements (3a, 3b) ausgebildete Rippenstruktur (5) eine gleichmäßig ausgebildete Rippenstruktur (5) ist, welche eine Vielzahl von gleichmäßig angeordneten Öffnungen definiert, welche durch Rippen der Rippenstruktur (5) voneinander beabstandet sind, und
**dass** die in der Vorderseite des Stützelements (3a, 3b) ausgebildeten Löcher (4) und die auf der Rückseite des Stützelements (3a, 3b) ausgebildete Rippenstruktur (5) mit den gleichmäßig angeordneten Öffnungen über die gesamte Stützfläche (2a, 2b) des Stützelements (3a, 3b) ausgebildet sind.

2. Lordosenstützkorb nach Anspruch 1,
**dadurch gekennzeichnet,**
**dass** die Löcher (4) in der Vorderseite des Stützelements (3a) in Form einer im Wesentlichen gleichmäßigen netzartigen Struktur ausgebildet sind.

3. Lordosenstützkorb nach Anspruch 1 oder 2,
**dadurch gekennzeichnet,**
**dass** die Löcher (4) als Durchgangslöcher, welche durch die Stützfläche (2a, 2b) hindurch verlaufen, ausgebildet sind.

4. Lordosenstützkorb nach einem der vorhergehenden Ansprüche,
**dadurch gekennzeichnet,**
**dass** Abmessungen der durch die Rippenstruktur (5) definierten Öffnungen größer als Abmessungen der in der Vorderseite des Stützelements (3a, 3b) ausgebildeten Löcher (4) sind.

5. Lordosenstützkorb nach einem der vorhergehenden Ansprüche,
**dadurch gekennzeichnet,**
**dass** Abmessungen der durch die Rippenstruktur definierten Öffnungen einem Vielfachen von Abmessungen der in der Vorderseite des Stützelements (3a, 3b) ausgebildeten Löcher (4) entsprechen.

6. Lordosenstützkorb nach einem der vorhergehenden Ansprüche,
**dadurch gekennzeichnet,**
**dass** die durch die Rippenstruktur (5) definierten Öffnungen mehreckig sind.

7. Lordosenstützkorb nach einem der vorhergehenden Ansprüche,
**dadurch gekennzeichnet,**
**dass** die durch die Rippenstruktur (5) definierten Öffnungen rautenförmig sind.

8. Lordosenstützkorb nach einem der vorhergehenden Ansprüche,
**dadurch gekennzeichnet,**
**dass** die durch die Rippenstruktur (5) definierten Öffnungen wabenförmig sind.

9. Lordosenstützkorb nach einem der vorhergehenden Ansprüche,
**dadurch gekennzeichnet,**
**dass** die auf der Rückseite des Stützelements (3a, 3b) ausgebildete Rippenstruktur (5) durch Rippen definiert ist, welche zumindest teilweise über die in der Vorderseite des Stützelements (3a, 3b) ausgebildeten Löcher (4) verlaufen.

10. Lordosenstützkorb nach einem der Ansprüche 1-8,
**dadurch gekennzeichnet,**
**dass** die auf der Rückseite des Stützelements (3a, 3b) ausgebildete Rippenstruktur (5) durch Rippen definiert ist, welche über die in der Vorderseite des Stützelements (3a, 3b) ausgebildeten Löcher (4) voneinander trennende Stege derart verlaufen, dass die Rippen nicht über die Löcher (4) verlaufen.

11. Lordosenstützkorb nach einem der vorhergehenden Ansprüche,
**dadurch gekennzeichnet,**
**dass** der Lordosenstützkorb (1) einteilig ausgebildet ist.

12. Lordosenstützkorb nach einem der vorhergehenden Ansprüche,
**dadurch gekennzeichnet,**
**dass** der Lordosenstützkorb (1) mindestens zwei Stützelemente (3a, 3b) umfasst, welche durch mindestens einen flexiblen Abschnitt (6) miteinander verbunden sind.

13. Lordosenstützkorb nach Anspruch 12,
**dadurch gekennzeichnet,**
**dass** der mindestens eine flexible Abschnitt (6) abwechselnd angeordnete Vertiefungen und Erhebungen von dem einen Stützelement (3a) zu dem anderen Stützelement (3b) hin aufweist.

14. Lordosenstütze mit einem Lordosenstützkorb (1) nach einem der vorhergehenden Ansprüche.

## Claims

1. A lumbar support basket,
having at least one support element (3a, 3b) with at least one support surface (2a, 2b),
a plurality of essentially uniformly arranged holes (4) being arranged in a front side of the support element (3a, 3b), and a rib structure (5) being formed on a rear side of the support element (3a, 3b) having the essentially uniformly arranged holes (4),
**characterised in that**
the rib structure (5) formed on the rear side of the support element (3a, 3b) is a uniform rib structure defining a plurality of uniformly arranged openings which are separated from one another by ribs of the rib structure (5), and
the holes (4) formed in the front side of the support element (3a, 3b) and the rib structure (5) defining the uniformly arranged openings formed on the rear side of the support element (3a, 3b) are formed over the entire support surface (2a, 2b) of the support element (3a, 3b).

2. Lumbar support basket according to Claim 1,
**characterised in that**
the holes (4) in the front side of the support element (3a) are designed in the form of an essentially uniformly net-like structure.

3. Lumbar support basket according to Claim 1 or 2,
**characterised in that**
the holes (4) are designed as through holes, which extend through the support surface (2a, 2b).

4. Lumbar support basket according to any one of the preceding claims,
**characterised in that**
dimensions of the openings defined by the rib structure (5) are greater than dimensions of the holes (4) formed in the front side of the support element (3a, 3b).

5. Lumbar support basket according to any one of the preceding claims,
**characterised in that**
dimensions of the openings defined by the rib structure correspond to a multiple of dimensions of the holes (4) formed in the front side of the support element (3a, 3b).

6. Lumbar support basket according to any one of the preceding claims,
**characterised in that** the openings defined by the rib structure (5) are polygonal.

7. Lumbar support basket according to any one of the preceding claims,
**characterised in that** the openings defined by the rib structure (5) are rhombic.

8. Lumbar support basket according to any one of the preceding claims,
**characterised in that** the openings defined by the rib structure (5) are honeycomb-shaped.

9. Lumbar support basket according to any one of the preceding claims,
**characterised in that** the rib structure (5) formed on the rear side of the support element (3a, 3b) is defined by ribs which at least partially extend over the holes (4) formed in the front side of the support element (3a, 3b).

10. Lumbar support basket according to any one of Claims 1 - 8,
**characterised in that** the rib structure (5) formed on the rear side of the support element (3a, 3b) is defined by ribs which extend over webs separating holes (4) formed in the front side of the support element (3a, 3b) from one another, in such a way that the ribs do not extend over the holes (4).

11. Lumbar support basket according to any one of the preceding claims,
**characterised in that** the lumbar support basket (1) is designed integrally.

12. Lumbar support basket according to any one of the preceding claims,
**characterised in that** the lumbar support basket (1) comprises at least two support elements (3a, 3b), which are connected to one another by at least one flexible section (6).

13. Lumbar support basket according to Claim 12,
**characterised in that** the at least one flexible section (6) has indentations and ridges arranged alternately from one support element (3a) to the other support element (3b).

14. Lumbar support with a lumbar support basket (1) according to any one of the preceding claims.

## Revendications

1. Armature de soutien pour lordose, avec au moins un élément de soutien (3a, 3b) doté d'au moins une surface de soutien (2a, 2b),
une pluralité d'orifices (4) disposés sensiblement régulièrement étant formés sur une face avant de l'élément de soutien (3a, 3b), et une structure à nervures (5) avec les orifices (4) disposés sensiblement régulièrement étant formée sur une face arrière de l'élément de soutien (3a, 3b),
**caractérisée en ce que**
la structure à nervures (5) formée sur la face arrière de l'élément de soutien (3a, 3b) est une structure à nervures (5) régulière, laquelle définit une pluralité d'ouvertures disposées de façon régulière et qui sont espacées les unes des autres par des nervures de la structure à nervures (5), et
et **en ce que** les orifices (4) formés sur la face avant de l'élément de soutien (3a, 3b) et la structure à nervures (5) formée sur la face arrière de l'élément de soutien (3a, 3b) avec les ouvertures disposées de façon régulière sont formés sur toute la surface de soutien (2a, 2b) de l'élément de soutien (3a, 3b).

2. Armature de soutien pour lordose selon la revendication 1,
**caractérisée en ce que**
les orifices (4) dans la face avant de l'élément de soutien (3a, 3b) sont réalisés sous la forme d'une structure de type grille sensiblement homogène.

3. Armature de soutien pour lordose selon la revendication 1 ou 2,
**caractérisée en ce que**
les orifices (4) sont conçus comme des orifices de passage qui s'étendent à travers la surface de soutien (2a, 2b).

4. Armature de soutien pour lordose selon l'une quelconque des revendications précédentes,
**caractérisée en ce que**
les dimensions des ouvertures définies par la structure à nervures (5) sont supérieures aux dimensions des orifices (4) formés sur la face avant de l'élément de soutien (3a, 3b).

5. Armature de soutien pour lordose selon l'une quelconque des revendications précédentes,
**caractérisée en ce que**
les dimensions des ouvertures définies par la structure à nervures correspondent à un multiple des dimensions des orifices (4) formés sur la face avant de l'élément de soutien (3a, 3b).

6. Armature de soutien pour lordose selon l'une quelconque des revendications précédentes,
**caractérisée en ce que**
les ouvertures définies par la structure à nervures (5) sont polygonales.

7. Armature de soutien pour lordose selon l'une quelconque des revendications précédentes,
**caractérisée en ce que**
les ouvertures définies par la structure à nervures (5) sont en forme de losange.

8. Armature de soutien pour lordose selon l'une quelconque des revendications précédentes,
**caractérisée en ce que**
les ouvertures définies par la structure à nervures (5) sont alvéolées.

9. Armature de soutien pour lordose selon l'une quelconque des revendications précédentes,
**caractérisée en ce que**
la structure à nervures (5) formée sur la face arrière de l'élément de soutien (3a, 3b) est définie par des nervures qui s'étendent au moins en partie au-dessus des orifices (4) formés sur la face avant de l'élément de soutien (3a, 3b).

10. Armature de soutien pour lordose selon l'une quelconque des revendications 1 à 8,
**caractérisée en ce que**
la structure à nervures (5) formée sur la face arrière de l'élément de soutien (3a, 3b) est définie par des nervures qui s'étendent de telle sorte sur des entretoises séparant les uns des autres les orifices (4) formés sur la face avant de l'élément de soutien (3a, 3b) que les nervures ne s'étendent pas au-dessus des orifices (4).

11. Armature de soutien pour lordose selon l'une quelconque des revendications précédentes,
**caractérisée en ce que**
l'armature de soutien pour lordose (1) est conçue en une seule pièce.

12. Armature de soutien pour lordose selon l'une quelconque des revendications précédentes,
**caractérisée en ce que**
l'armature de soutien pour lordose (1) comprend au moins deux éléments de soutien (3a, 3b) qui sont rattachés l'un à l'autre par au moins une section flexible (6).

13. Armature de soutien pour lordose selon la revendication 12,
**caractérisée en ce qu'**
au moins une des sections flexibles (6) présente en alternance des creux et des bosses d'un des éléments de soutien (3a) vers l'autre élément de soutien (3b).

14. Soutien pour lordose avec une armature de soutien pour lordose (1) selon l'une quelconque des revendications précédentes.
